# EUROPÄISCHE PATENTSCHRIFT

(11) **EP 2 841 837 B1**
(45) Veröffentlichungstag und Bekanntmachung des Hinweises auf die Patenterteilung: **23.03.2022**
(21) Anmeldenummer: 13725778.8
(22) Anmeldetag: 12.04.2013
(51) Int. Cl.: F16L 37/14, F16L 37/12, F24C 3/00

(54) **GASBEHEIZTES GARGERÄT**
GAS-HEATED COOKING APPLIANCE
APPAREIL DE CUISSON CHAUFFÉ AU GAZ

(30) Priorität: 27.04.2012 EP 12382160; 29.05.2012 ES 201230811
(43) Veröffentlichungstag der Anmeldung: 04.03.2015
(73) Patentinhaber: BSH Hausgeräte GmbH, 81739 München (DE)
(72) Erfinder: GONZALEZ CELIS, Jesus Raul, 39300 Torrelavega (ES)
(86) Internationale Anmeldenummer: PCT/IB2013/052904
(87) Internationale Veröffentlichungsnummer: WO 2013/160790

(56) Entgegenhaltungen:
- EP-A2- 2 241 823
- DE-U1-202004 020 093

## Beschreibung

Die vorliegende Erfindung betrifft ein gasbeheiztes Gargerät mit einem Gasanschluss.

Herkömmliche gasbeheizte Gargeräte umfassen zumindest ein Gasventil sowie einen Brenner. Das Gasventil ist mit dem Brenner mittels einer Gasleitung verbunden. Eine gasdichte Verbindung zwischen der Gasleitung und dem Gasventil bzw. der Gasleitung und dem Brenner wird mittels einer Schraubverbindung hergestellt.

Die EP 2 241 823 A2 beschreibt ein Kochfeld, bei dem in einer Bodenwand und/oder in Seitenwänden eines Gehäuseteils zumindest ein Formabschnitt ausgebildet ist, der mittels Tiefziehen geformt ist, wobei mindestens eine Abkantung zwischen der Bodenwand und den Seitenwänden durch einen Blechfaltvorgang entlang einer vorbereiteten Blechfaltlinie geformt ist.

Die DE 20 2004 020 093 U1 beschreibt eine Fluidleitungsverbindungsanordnung, die mit mindestens einem Verbindungselement ausgebildet ist, welches geeignet ist, einen Endabschnitt einer ersten Leitung mit einer zweiten Leitung, einem Anschlussstutzen oder dergleichen dicht zu verbinden. Die Fluidleitungsverbindungsanordnung ist insbesondere in Kaffee- bzw. Espressomaschinen vorgesehen.

Aufgabe der vorliegenden Erfindung ist es, einen verbesserten Gasanschluss für ein gasbeheiztes Gargerät zu schaffen.

Zur Lösung dieser Aufgabe wird ein gasbeheiztes Gargerät nach Anspruch 1 vorgeschlagen.

Gegenüber der bekannten Schraubverbindung lässt sich ein solches Sicherungselement schnell und einfach - auch ohne Zuhilfenahme von Werkzeugen - montieren. Außerdem lassen sich die zweite Aufnahme sowie das korrespondierende Sicherungselement einfach herstellen.

Gemäß einer Ausführungsform ist die zweite Aufnahme in der ersten Aufnahme integriert. "Integriert" meint insbesondere, dass die zweite Aufnahme in dem Material der ersten Aufnahme ausgebildet ist. Dadurch können die Funktionen der ersten und zweiten Aufnahme in ein Bauteil integriert werden, was den benötigten Bauraum sowie Herstellungskosten reduziert.

Die erste Aufnahme ist in Form eines Rohrs vorgesehen, welches dazu ausgebildet ist, das Endstück der Gasleitung in seinem Inneren aufzunehmen. Das Rohr weist beispielsweise einen kreisrunden Innen- und/der Außenquerschnitt auf. Der Innenquerschnitt des Rohrs kann ein Übermaß in Bezug auf das Endstück aufweisen, so dass Fertigungstoleranzen bezüglich des äußeren Umfangs des Endstücks unproblematisch sind, wodurch sich die Fertigungskosten weiterhin reduzieren lassen.

Die zweite Aufnahme ist in Form zweier Schlitze ausgebildet. Die Schlitze können jeweils als ein das Muttermaterial vollständig durchdringender Schlitz ausgebildet sein. Das Sicherungselement greift in die zwei Schlitze ein. Bevorzugt wird das Sicherungselement in die Schlitze elastisch eingespreizt.

Jeder Schlitz durchdringt eine Wand des Rohrs radial. "Radial", "axial" und "in Umfangsrichtung" beziehen sich vorliegend auf eine Achse der ersten Aufnahme, entlang derer das Endstück der Gasleitung in die erste Aufnahme einführbar ist. Dadurch, dass der Schlitz die Wand des Rohrs radial durchdringt, lässt sich das Sicherungselement einfach mit dem Endstück, insbesondere einem Kragen desselben, in Eingriff bringen, so dass sich ein axialer Formschluss zwischen dem Rohr und dem Endstück ergibt.

Es sind zwei Schlitze vorgesehen, welche die Wand des Rohrs jeweils radial durchdringen und sich radial gegenüberliegen. Erfolgt eine Sicherung durch beide Schlitze hindurch, beispielsweise mittels zweier Schenkel eines U-förmig ausgebildeten Sicherungselements, so kann eine symmetrische Halterung des Endstücks in der ersten Aufnahme erzielt werden.

Zwischen den Schlitzen ist in Umfangsrichtung zumindest ein Steg ausgebildet, mit welchem das Sicherungselement radial formschlüssig in Eingriff bringbar ist. Dadurch kann eine einfache Halterung des Sicherungselements an dem Gasanschluss erzielt werden, das heißt, das Sicherungselement kann beispielsweise nicht unter Einwirkung der Schwerkraft herausfallen. Bilden die Schlitze beispielsweise zwei oder mehr Stege in Umfangsrichtung miteinander, so kann das Sicherungselement von verschiedenen Seiten aufgeschoben werden, so dass eine Montage noch weiter vereinfacht wird.

Der Gasanschluss kann beispielsweise an einem Unterteil des Brenners ausgebildet sein. Der Gasanschluss steht mit einer Düse des Brenners gasleitend in Verbindung.

Das Gargerät umfasst weiterhin die Gasleitung sowie das Sicherungselement. Das Sicherungselement steht mit der zweiten Aufnahme elastisch in Eingriff und hält dadurch das Endstück der Gasleitung gasdicht in der ersten Aufnahme.

Das Gargerät ist bevorzugt als Haushaltsgargerät ausgebildet.

Es ist ein Sicherungselement vorgesehen, welches mit der zweiten Aufnahme axial in Eingriff steht. Demnach wird ein Formschluss in axialer Richtung zwischen der ersten Aufnahme und dem Endstück der Gasleitung erzielt.

Gemäß einer weiteren Ausführungsform weist das Endstück der Gasleitung einen Kragen auf, welcher mit dem Sicherungselement axial in Eingriff steht. Bevorzugt weist der Kragen in axialer Richtung ein Übermaß auf, so dass das Sicherungselement über den Kragen gepresst werden muss, um dieses in Eingriff mit der zweiten Aufnahme zu bringen. Dadurch wird eine in axialer Richtung spielfreie Verbindung zwischen dem Endstück und der ersten Aufnahme erzielt.

Zwischen dem Endstück der Gasleitung und der ersten Aufnahme kann in axialer und/oder radialer Richtung ein Dichtelement, beispielsweise ein Dichtring, angeordnet sein. Dadurch wird ein Gasverlust zwischen dem Endstück der Gasleitung und einer Gasaustragsöffnung der ersten Aufnahme verhindert.

Gemäß einer weiteren Ausführungsform ist das Sicherungselement in Form eines elastischen Drahts ausgebildet, welcher in die zweite Aufnahme eingespreizt ist. Ein solches Sicherungselement lässt sich besonders einfach herstellen und montieren.

Das Sicherungselement ist U-förmig mit zwei Einbuchtungen an seinen Schenkeln ausgebildet, welche den zumindest einen Steg hintergreifen. Dadurch wird ein Formschluss zwischen dem Sicherungselement und dem Gasanschluss auf einfache Weise geschaffen.

Die Einbuchtungen weisen jeweils eine Kontur auf, welche mit dem Endstück der Gasleitung radial in Anlage steht. Dadurch wird eine Spielfreiheit zwischen dem Sicherungselement und der Gasleitung in hohem Maße gewährleistet.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigen dabei:
Fig. 1: in einer perspektivischen Ansicht ein gasbeheiztes Gargerät gemäß einer Ausführungsform;
Fig. 2: in einer Explosionsdarstellung verschiedene Komponenten aus einem Bereich II aus Fig. 1;
Fig. 3: in einer perspektivischen Ansicht einen Teil der Komponenten aus Fig. 2 im zusammengesetzten Zustand;
Fig. 4: einen Schnitt IV-IV aus Fig. 3 in perspektivischer Ansicht; und
Fig. 5: in einer Explosionsdarstellung verschiedene Komponenten aus einem Bereich V aus Fig. 1.

In den Figuren sind gleiche oder funktionsgleiche Elemente mit denselben Bezugszeichen versehen worden sofern, nichts Gegenteiliges angegeben ist.

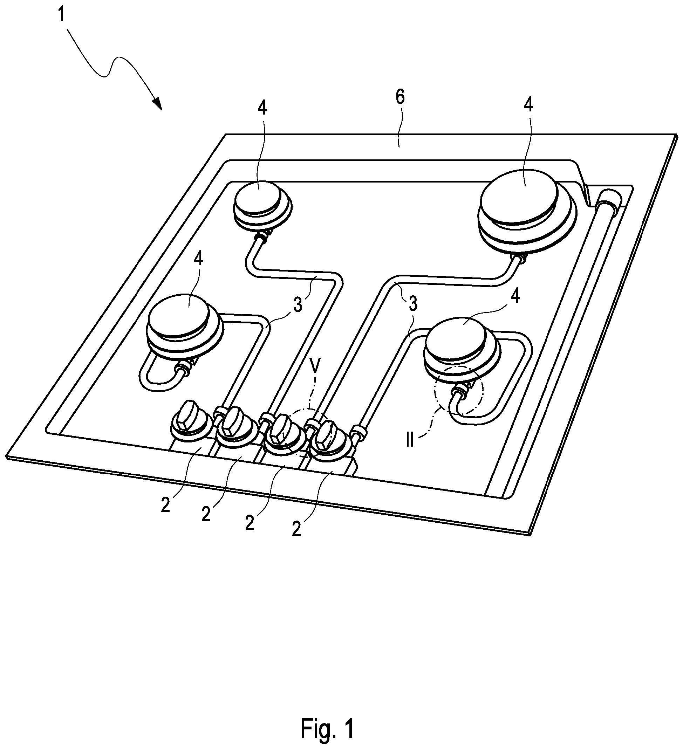

Fig. 1 zeigt in einer perspektivischen Ansicht ein Gargerät in Form einer Haushalts-Gaskochmulde 1.

Die Gaskochmulde 1 umfasst mehrere Gasventile 2. Die Gasventile 2 sind jeweils über eine Gasleitung 3 mit Brennern 4 verbunden.

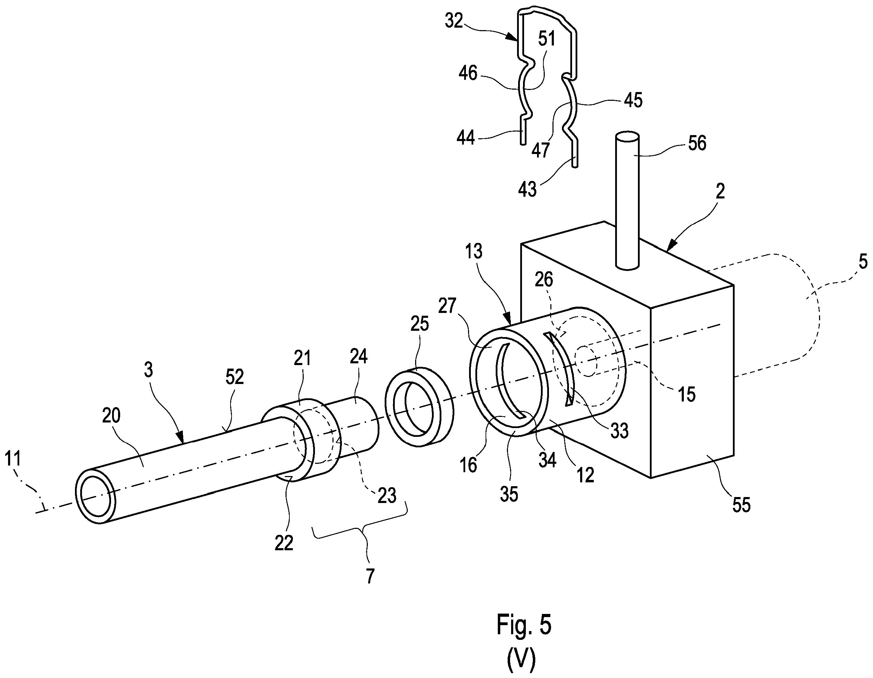

Je nach Stellung der Gasventile 2 geben diese einen jeweiligen Gasfluss von einer Versorgungsleitung 5 (siehe Fig. 5) hin zu den Brennern 4 frei oder sperren diesen.

Die Gasventile 2, die Gasleitungen 3 sowie die Brenner 4 können in einem Bodenblech 6 der Gaskochmulde 1 angeordnet sein. Ein Abdeckblech der Gaskochmulde 1 ist in Fig. 1 nicht gezeigt, um den Blick auf die darunter liegenden Komponenten freizugeben.

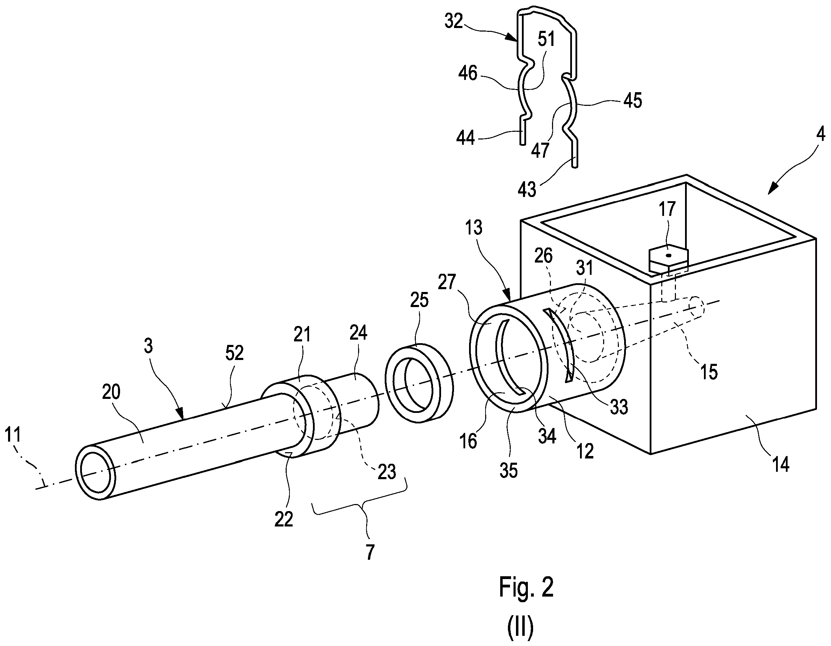

Fig. 2 zeigt in einer Explosionsansicht Komponenten aus einem Bereich II aus Fig. 1.

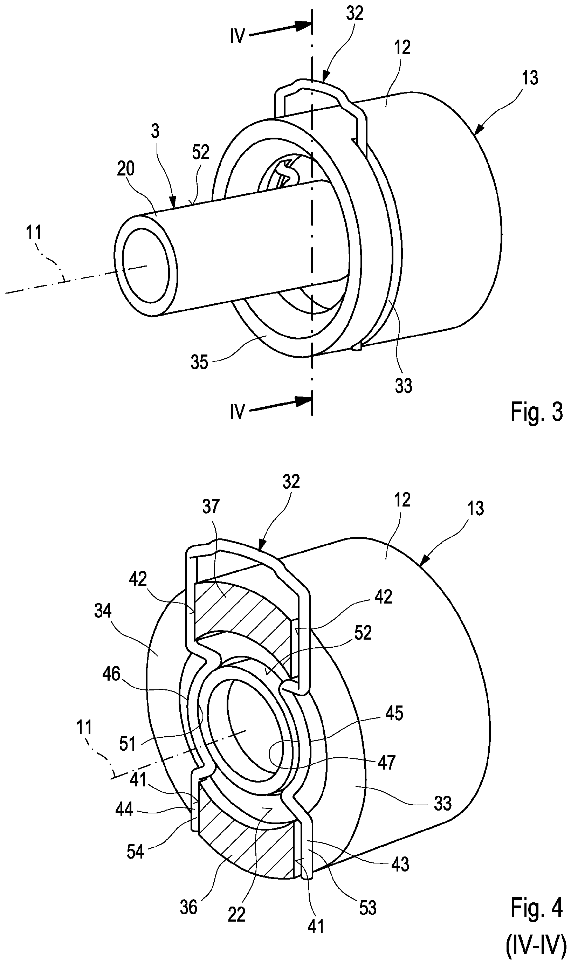

Das gezeigte Ende der Gasleitung 3 umfasst ein Endstück 7. Das Endstück 7 ist entlang einer Achse 11 in einer ersten Aufnahme in Form eines Rohrs 12 aufnehmbar, wie in Fig. 3 gezeigt. Das Rohr 12 ist Bestandteil eines Gasanschlusses 13 des in Fig. 2 schematisiert angedeuteten Brenners 4. Insbesondere ist der Gasanschluss 13 Bestandteil eines Unterteils 14 des Brenners 4.

Das Unterteil 14 weist einen Gaskanal 15 auf, welcher einerseits mit dem Innenquerschnitt 16 des Rohrs 12 und andererseits mit einer Düse 17 des Unterteils 14 gasleitend in Verbindung steht. Das aus der Düse 17 nach oben austretende Brenngas wird mit Primärluft vermischt und anschließend verbrannt, wobei Wärme freigesetzt wird. Diese Wärme wird zum Erwärmen eines auf dem Brenner 4 angeordneten Gargutbehälters (nicht dargestellt) genutzt.

Das Endstück 7 der Gasleitung 3 umfasst einen Kragen 21 mit einer vorderen Ringfläche 22 und einer hinteren Ringfläche 23 (gestrichelt angedeutet, weil in Fig. 2 verdeckt). Die Ringflächen 22, 23 sind jeweils senkrecht zu der Achse 11 orientiert. Über das freie Ende 24 des Endstücks 7 wird eine Dichtung beispielsweise in Form eines Dichtrings 25 geschoben. Im zusammengesetzten Zustand (siehe Fig. 3) presst die Ringfläche 23 den Dichtring 25 gegen eine Ringfläche 26 des Gasanschlusses 13. Die Ringsfläche 26 liegt einer offenen Seite 27 des Rohrs 12 gegenüber und begrenzt darüber hinaus eine Gaseintrittsöffnung 31 des Gaskanals 15. Somit wird im zusammengesetzten Zustand (siehe Fig. 3) eine verlustfreie Leitung von Brenngas aus der Gasleitung 3 durch den Gasanschluss 13 hindurch in den Gaskanal 15 gewährleistet.

Das Gargerät 1 umfasst weiterhin, wie in Fig. 2 gezeigt, ein Sicherungselement 32, welches das Endstück 7 in dem Rohr 12 derart hält, dass die erläuterte gasdichte Verbindung gewährleistet wird.

Fig. 3 zeigt in einer perspektivischen Ansicht die Gasleitung 3, den Gasanschluss 13 sowie das Sicherungselement 32 aus Fig. 2 im zusammengesetzten Zustand. Fig. 4 zeigt perspektivisch einen Schnitt IV-IV aus Fig. 3.

Für den zusammengesetzten, das heißt montierten Zustand wird der Dichtring 25 auf das freie Ende 24 (siehe Fig. 2) aufgeschoben. Anschließend wird das Endstück 7 in das Rohr 12 entlang der Achse 11 hineingeschoben. In einem weiteren Schritt wird nun das Sicherungselement 32 elastisch aufgespreizt und in zwei eine zweite Aufnahme bildende Schlitze 33, 34 in der Wand 35 eingespreizt. Die Schlitze 33, 34 erstrecken sich jeweils radial durch die Wand 35 des Rohrs 12 hindurch. "Radial", "axial" und "in Umfangsrichtung" bezieht sich vorliegend auf die Achse 11. Außerdem liegen sich die Schlitze 33, 34 radial gegenüber. Die Schlitze 33, 34 können beispielsweise durch spanende Bearbeitung, insbesondere Fräsen, erzeugt werden. Das Rohr 12 kann hierzu aus Metall oder Kunststoff hergestellt sein.

Wie in Fig. 4 gezeigt, bilden die Schlitze 33, 34 in Umfangsrichtung zwischen sich Stege 36, 37 aus. Die Stege 36, 37 weisen zueinander fluchtende Seitenflächen 41, 42 auf. Ein Paar fluchtender Seitenflächen 41, 42 lässt sich beispielsweise durch Fräsen in gerader Linie durch das Rohr 12 hindurch erzeugen.

Das Sicherungselement 32 kann beispielsweise aus einem elastischen Metalldraht gebildet sein. Das Sicherungselement 32 weist eine U-Form mit Schenkeln 43, 44 auf. In einem jeweiligen Schenkel 43, 44 ist eine Einbuchtung 45, 46 (siehe auch Fig. 2) ausgebildet. Eine jeweilige Einbuchtung 45, 46 weist eine Innenkontur 47, 51 auf, welche der äußeren Umfangsfläche 52 des Rohrs 20 der Gasleitung 3 folgt. Außerdem liegen die Einbuchtungen 45, 46 gegen die Ringfläche 22 des Kragens 21 des Endstücks 7 derart an, dass der Kragen 21 die Dichtung 25 gegen die Ringfläche 26 verspannt, um die erläuterte gasdichte Verbindung zu gewährleisten. Der Kragen 21 kann hierzu ein definiertes Übermaß in axialer Richtung aufweisen, so dass ein gewisser Kraftaufwand erforderlich ist, um das Sicherungselement 32 in die Schlitze 33, 34 einzuspreizen bzw. die Einbuchtungen 45, 46 in Anlage mit der Umfangsfläche 52 zu bringen.

Die Einbuchtungen 45, 46 sorgen darüber hinaus für einen Formschluss zwischen dem Sicherungselement 32 und dem Steg 37 in radialer Richtung weg von der Achse 11. Enden 53, 54 der Schenkel 43, 44 können derart beschaffen sein, dass sie einen Formschluss mit dem Steg 36 in radialer Richtung hin zu der Achse 11 schaffen. Dadurch wird das Sicherungselement 32 zuverlässig in den Schlitzen 33, 34 gehalten. Außerdem wird die Halterung der Gasleitung 3 durch die Einbuchtungen 45, 46 mit deren angepasster Innenkontur 47, 51 verbessert.

Fig. 5 zeigt eine Explosionsansicht verschiedene Komponenten aus einem Bereich V aus Fig. 1.

Fig. 5 zeigt die Anwendung des im Zusammenhang mit den Figuren 2 bis 4 beschriebenen Prinzips auf ein Gasventil 2 aus Fig. 1. Demnach weist das Gasventil 2, insbesondere ein Ventilgehäuse 55 desselben den Gasanschluss 13 auf. Ein Unterschied besteht allerdings darin, dass der Gaskanal 15 über ein nicht gezeigtes Schließelement - je nach Stellung desselben - mit der Versorgungsleitung 5 in Verbindung steht bzw. von dieser getrennt ist. Das Schließelement ist von einer Welle 56 des Gasventils 2 ansteuerbar.

Obwohl die Erfindung vorliegend anhand von Ausführungsbeispielen beschrieben wurde, ist sie vielfältig modifizierbar.

### Verwendete Bezugszeichen:

- 1: Gaskochmulde
- 2: Gasventil
- 3: Gasleitung
- 4: Brenner
- 5: Versorgungsleitung
- 6: Bodenblech
- 7: Endstück
- 11: Achse
- 12: Rohr
- 13: Gasanschluss
- 14: Unterteil
- 15: Gaskanal
- 16: Innenquerschnitt
- 17: Düse
- 20: Rohr
- 21: Kragen
- 22: Ringfläche
- 23: Ringfläche
- 24: freies Ende
- 25: Dichtring
- 26: Ringfläche
- 27: offene Seite
- 31: Gaseintrittsöffnung
- 32: Sicherungselement
- 33: Schlitz
- 34: Schlitz
- 35: Wand
- 36: Steg
- 37: Steg
- 41: Seitenfläche
- 42: Seitenfläche
- 43: Schenkel
- 44: Schenkel
- 45: Einbuchtung
- 46: Einbuchtung
- 47: Innenkontur
- 51: Innenkontur
- 52: äußere Umfangsfläche
- 53: Ende
- 54: Ende
- 55: Ventilgehäuse
- 56: Welle

## Patentansprüche

1. Gasbeheiztes Gargerät (1), insbesondere Gaskochmulde, mit einer Gasleitung (3), einem Brenner (4) mit einem Gasanschluss (13), der eine erste Aufnahme (12), in der ein Endstück (7) der Gasleitung (3) aufgenommen ist, und eine zweite Aufnahme (33, 34), mit welcher ein Sicherungselement (32) zum gasdichten Halten des Endstücks (7) in der ersten Aufnahme (12) elastisch in Eingriff gebracht ist, umfasst, und dem Sicherungselement (32), welches mit der zweiten Aufnahme (33, 34) axial in Eingriff steht, wobei:
die erste Aufnahme (12) in Form eines Rohrsvorgesehen ist, welches das Endstück (7) der Gasleitung (3) entlang einer Achse (11) in seinem Innenquerschnitt (16) aufnimmt,
die zweite Aufnahme (33, 34) in Form zweier Schlitze (33, 34) ausgebildet ist, welche eine Wand (35) des Rohrs (12) jeweils radial durchdringen und sich radial gegenüberliegen,
zwischen den Schlitzen (33, 34) in Umfangsrichtung zumindest ein Steg (36, 37) ausgebildet ist, mit welchem das Sicherungselement (32) radial formschlüssig in Eingriff ist,
das Sicherungselement (32) U-förmig mit zwei Einbuchtungen (45, 46) an seinen Schenkeln (43, 44) ausgebildet ist, welche den zumindest einen Steg (37) hintergreifen, so dass ein Formschluss zwischen dem Sicherungselement (32) und dem zumindest einen Steg (37) in radialer Richtung weg von der Achse (11) gebildet wird, und
die Einbuchtungen (45, 46) jeweils eine Kontur (47, 51) aufweisen, welche mit dem Endstück (7) der Gasleitung (3) radial in Anlage steht.

2. Gargerät nach Anspruch 1, **dadurch gekennzeichnet, dass** das Endstück (7) der Gasleitung (3) einen Kragen (21) aufweist, welcher mit dem Sicherungselement (32) axial in Eingriff steht.

3. Gargerät nach Anspruch 1 oder 2, **dadurch gekennzeichnet, dass** das Sicherungselement (32) in Form eines elastischen Drahts ausgebildet ist, welcher in die zweite Aufnahme (33, 34) eingespreizt ist.

## Claims

1. Gas-heated cooking appliance (1), in particular gas hob, with a gas pipe (3), a burner (4) with a gas connector (13), which comprises a first support (12), in which an end piece (7) of the gas pipe (3) is received, and a second support (33, 34), with which a fixing element (32) for holding the end piece (7) in the first support (12) in a gas-tight manner engages elastically, and the fixing element (32), which engages axially with the second support (33, 34), wherein:
the first support (12) is provided in the form of a pipe, which receives the end piece (7) of the gas pipe (3) along an axis (11) in its inner cross-section (16),
the second support (33, 34) is embodied in the form of two slots (33, 34), which penetrate a wall (35) of the pipe (12) in each case radially and oppose one another radially,
at least one web (36, 37) is embodied in the peripheral direction between the slots (33, 34), with which web the fixing element (32) engages radially in a form-fit manner,
the fixing element (32) is embodied in a U-shape with two indentations (45, 46) on its limbs (43 ,44), which undercut the at least one web (37), so that a form-fit is formed between the fixing element (32) and the at least one web (37) in the radial direction away from the axis (11), and
the indentations (45, 46) each have a contour (47, 51), which is in radial contact with the end piece (7) of the gas pipe (3).

2. Cooking appliance according to claim 1, **characterised in that** the end piece (7) of the gas pipe (3) has a collar (21), which engages axially with the fixing element (32).

3. Cooking appliance according to claim 1 or 2, **characterised in that** the fixing element (32) is embodied in the form of an elastic wire, which is injected into the second support (33, 34).

## Revendications

1. Appareil de cuisson (1) chauffé au gaz, notamment table de cuisson au gaz, comprenant une conduite de gaz (3), un brûleur (4) doté d'un raccord de gaz (13) qui comprend un premier logement (12), dans lequel un embout (7) de la conduite de gaz (3) est logé, et un deuxième logement (33, 34) avec lequel un élément de sécurité (32) destiné au maintien étanche au gaz de l'embout (7) est mis en prise dans le premier logement (12) de manière élastique, et l'élément de sécurité (32) lequel est en prise axialement avec le deuxième logement (33, 34), dans lequel
le premier logement (12) est ménagé sous forme d'un tube qui loge l'embout (7) de la conduite de gaz (3) le long d'un axe (11) dans sa section transversale intérieure (16),
le deuxième logement (33, 34) est réalisé sous forme de deux fentes (33, 34) lesquelles traversent une paroi (35) du tube (12) respectivement radialement et s'opposent radialement,
au moins une nervure (36, 37) est réalisée entre les fentes (33, 34) en direction circonférentielle, avec laquelle l'élément de sécurité (32) est en prise radialement par adhérence de forme,
l'élément de sécurité (32) est réalisé en forme de U avec deux échancrures (45, 46) sur ses côtés (43, 44), lesquelles ont prise par l'arrière sur l'au moins une nervure (37) de sorte qu'une adhérence de forme entre l'élément de sécurité (32) et l'au moins une nervure (37) est formée en s'éloignant de l'axe (11) en direction axiale, et
les échancrures (45, 46) présentent respectivement un contour (47, 51) qui est radialement en contact avec l'embout (7) de la conduite de gaz (3).

2. Appareil de cuisson selon la revendication 1, **caractérisé en ce que** l'embout (7) de la conduite de gaz (3) présente un collet (21) qui est axialement en prise avec l'élément de sécurité (32).

3. Appareil de cuisson selon la revendication 1 ou 2, **caractérisé en ce que** l'élément de sécurité (32) est réalisé sous forme d'un fil élastique qui est écarté dans le deuxième logement (33, 34).
